# EUROPÄISCHE PATENTSCHRIFT

(11) **EP 0 546 299 B1**
(45) Veröffentlichungstag und Bekanntmachung des Hinweises auf die Patenterteilung: **10.05.1995**
(21) Anmeldenummer: 92118373.7
(22) Anmeldetag: 28.10.1992
(51) Int. Cl.: F16G 3/16

(54) **Vorrichtung zum Befestigen von Riemenverbindern aus in Reihe angeordneten Verbinderklammern auf den Gurtbandenden von Transportgurten**
Apparatus for affixing belt fasteners made of aligned fastening champs to conveyor belts
Dispositif de fixation aux extrémités de tapis transporteurs d'éléments de jonction de courroies constitués d'agrafes de jonction alignées

(30) Priorität: 11.12.1991 DE 4140743
(43) Veröffentlichungstag der Anmeldung: 16.06.1993
(73) Patentinhaber: GORO S.A., F-30340 Saint Privat des Vieux (FR)
(72) Erfinder: Schick, Jean-François, F-75016 Paris (FR)
(74) Vertreter: Honke, Manfred, Dr.-Ing.

(56) Entgegenhaltungen:
- EP-A- 0 464 399
- FR-A- 2 327 451
- FR-A- 2 507 728
- FR-A- 2 526 702
- GB-A- 772 155
- GB-A- 1 171 801
- GB-A- 1 357 316
- GB-A- 2 230 074
- US-A- 3 581 350

## Beschreibung

Die Erfindung betrifft eine Vorrichtung zum Befestigen von Riemenverbindern aus in Reihe angeordneten Verbinderklammern auf den Gurtbandenden von Transportgurten.

Beim Befestigen von Riemenverbindern bzw. deren Verbinderklammern auf den Gurtbandenden von Transportgurten besteht ein ständiges Problem darin, ein Eindringen der mit ihren Spitzen in die Führungslöcher der obenliegenden Klammerschenkel eingesetzten Befestigungskrampen nach dem Durchdringen des betreffenden Gurtbandendes in die Führungslöcher des im Biegegesenk aufliegenden unteren Klammerschenkels sicherzustellen. Denn im Zuge der Befestigung der Verbinderklammern werden deren obenliegende Klammerschenkel der Bandoberfläche niedergedrückt. Unter Berücksichtigung einerseits unterschiedlicher Bandstärken, andererseits der Bandelastizität ist eine Versetzung der oberen Führungslöcher gegenüber den unteren Führungslöchern nicht ausgeschlossen. Folglich ist nicht sichergestellt, daß die Spitzen der Befestigungskrampen tatsächlich nach dem Durchdringen des betreffenden Gurtbandes in die unteren Führungslöcher eindringen. Aus diesem Grunde wählt man häufig ein hinreichend großes Lochspiel und nimmt insoweit hinsichtlich des Klammersitzes und -haltes eine beeinträchtigte Befestigung der Verbindungsklammern und schließlich der Riemenverbinder in Kauf. Zwar hat man sich bereits um eine einwandfreie Positionierung der Verbinderklammern im Zuge ihrer Befestigung bemüht, beispielsweise Anschläge für die Verbinderklammern vorgesehen, jedoch befriedigen derartige Maßnahmen nicht. Das gilt insbesondere dann, wenn Verbinderklammern aus verhältnismäßig dünnem Blechmaterial Verwendung finden, deren Scharnierbögen zur Erhöhung der Beanspruchungs- und Verschleißfestigkeit als aus dem Blechmaterial gefaltete Bögen mit U-förmigem Querschnitt hergestellt sind. Das dünne Blechmaterial verlangt Führungslöcher mit einem möglichst geringem Führungsspiel für die Befestigungskrampen, um einen einwandfreien Sitz und Halt für die Verbinderklammern und folglich der Riemenverbinder auf den Gurtbandenden zu erreichen. - Hier setzt die Erfindung ein.

Der Erfindung liegt die Aufgabe zugrunde, eine Vorrichtung zum Befestigen von Riemenverbindern aus in Reihe angeordneten Verbinderklammern auf den Gurtbandenden von Transportgurten der eingangs beschriebenen Ausführungsform zu schaffen, welche selbst unter Berücksichtigung eines engen Bewegungsspiels ein einwandfreies Eindrücken der Befestigungskrampen bzw. deren Spitzen in die Führungslöcher der unteren bzw. im Biegegesenk aufliegenden Klammerschenkel der Verbinderklammern im Zuge des Eintreibens der Befestigungskrampen gewährleistet.

Zur Lösung dieser Aufgabe schlägt die Erfindung eine Vorrichtung zum Befestigen von Riemenverbindern aus in Reihe angeordeten Verbinderklarnern auf den Gurtbandenden von Transportgurten vor, mit zumindest einem Biegegesenk zum Positionieren der Verbinderklammern und einem auf dem Biegegesenk zentrierbaren Pressenkopf mit einem Führungskanal für einen gegen das Biegegesenk niederdrückbaren Stempel und für Befestigungskrampen, die mittels des Stempels durch übereinander angeordnete Führungslöcher in den Klammerschenkeln der Verbinderklammern hindurch und unter Durchdringung des zwischen den Klammerschenkeln eingschobenen Gurtbandendes eintreibbar sind und deren Spitzen in dem Biegegesenk umgebogen werden, wobei das Biegegesenk auf der einen Seite zwischen die Klammerschenkel vorderseitig verbindende Scharnierbögen der Verbinderklammern eingreifende Zentrierlamellen und auf der anderen Seite in rückseitige V-förmige Ausnehmungen der aufliegenden Klammerschenkel eingreifende Zentrierkeile aufweist und der niederfahrbare Pressenkopf einen Zentrieranschlag für das rückseitige Ende des zugeordneten Klammerschenkels der Verbinderklammern aufweist. - Diese Maßnahmen der Erfindung haben zur Folge, daß die auf dem Biegegesenk positionierten Verbinderklammern in Seiten- und Längsrichtung einwandfrei zentriert werden. Das gilt insbesondere für die unteren auf dem Biegegesenk aufliegenden Klammerschenkel, während die Zentrierung der oberen Klammerschenkel über die eingesetzten Befestigungskrampen erfolgt, welche mit geringem Bewegungspiel in den Führungskanal des Pressenkopfes eingreifen, der einerseits für die Führung des Stempels, andererseits zugleich für die Führung eben der Befestigungskrampen eingerichtet ist. Die nach Lehre der Erfindung verwirklichten Zentrierungsmaßnahmen ermöglichen die Ausbildung der Verbinderklammern bzw. deren Führungslöcher für die Befestigungskrampen mit einem eng tolerierten Lochspiel wie es insbesondere Verbinderklammern verlangen, die aus verhältnismäßig dünnem Blech bestehen und deren Scharnierbögen unter Bildung eines U-förmigen Querschnitts aus dem Blech gefaltet sind. Bei derartigen Verbinderklammern, die im übrigen schmaler als herkömmliche Ausführungsformen ausgebildet sind, weisen die Führungslöcher regelmäßig einen verhältnismäßig kleinen Durchmesser auf und finden zur Befestigung der Verbindungsklammern folglich auch verhältnismäßig dünne Befestigungskrampen Verwendung. Aus diesem Grunde muß ein Fluchten der Führungslöcher in dem oberen Klammerschenkel mit den Führungslöchern in dem unteren Klammerschenkel unbedingt gewährleistet sein, wenn die Befestigungskrampen durch das eingelegte Gurtbandende hindurch eingetrieben werden. Der Pressenkopf weist Zentrierzapfen auf, welche in Zentrierbohrungen des Biegegesenks einsteckbar sind. Diese Zentrierbohrungen sind über die Länge des Biegegesenkes angeordnet, so daß sich der Pressenkopf über die Länge des Biegegesenkes und folglich des Gurtbandendes mit Zentrierwirkung versetzen läßt. Zu diesem Zweck können außerdem zusammenwirkende Führungswangen an einerseits dem Biegegesenk und andererseits dem Pressenkopf vorgesehen sein. Auch andere Führungsmaßnahmen sind denkbar, um beispielsweise dem Pressenkopf mit Zentrierwirkung entlang des Biegegesenkes verfahren zu können. Jedenfalls meint Zentrierwirkung in diesem Zusammenhang, daß der Führungskanal für den Stempel bzw. zur Aufnahme der Befestigungskrampen stets derart positioniert ist, daß die Führungslöcher in den oberen Klammerschenkeln der Verbinderklammern mit den Führungslöchern in den unteren Klammerschenkeln fluchten, wenn diese ihrerseits in der beanspruchten Weise auf dem Biegegesenk zentriert sind. Durch den Zentrieranschlag am niederfahrbaren Pressenkopf für das rückseitige Ende des zugeordneten Klammerschenkels der Verbinderklammern wird ein zusätzlicher Zentriereffekt für die oberen Klammerschenkel erreicht. Mit Hilfe der erfindungsgemäßen Zentriermaßnahmen gelingt das exakte Fluchten der sich gegenüberliegenden Führungslöcher unabhängig von der Gurtdicke. Stets sind nach dem Eintreiben der Befestigungskrampen einwandfreier Sitz und Halt für die Verbinderklammern und folglich Riemenverbinder auf den Gurtbandenden gewährleistet.

Weitere erfindungswesentlichen Merkmale sind im folgenden aufgeführt. So können die Zentrierlamellen fluchtende Bohrungen zum Einführen eines von den Scharnierbögen der U-förmigen Verbinderklammern umgriffenen Scharnierstabes aufweisen, an den sich die Scharnierbögen auch während des Eintreibens der U-förmigen Befestigungskrampen anlegen. Vorzugsweise kragen die Zentrierlamellen soweit gegen die Positionierungsfläche für die unteren Klammerschenkel der Verbinderklammern vor, daß die Zentrierlamellen Anschläge für das zwischen die Klammerschenkel der Verbinderklammern eingelegte Gurtbandende bilden. Sofern die Verbinderklammern jeweils ein zwillingähnliches Scharnierbogenpaar aus z. B. gefaltetem Blechmaterial aufweisen, sieht die Erfindung vor, daß jeweils eine Zentrierlamelle zwischen die beiden Scharnierbögen einer jeden Verbinderklammer eingreift.

Im folgenden wird die Erfindung anhand einer lediglich ein Ausführungsbeispiel darstellenden Zeichnung näher erläutert; es zeigen:
- Fig. 1: einen schematischen Vertikalschnitt durch eine erfindungsgemäße Befestigungsvorrichtung, die für Handbetätigung eingerichtet ist, vor Aufnahme von Befestigungskrampen im Führungskanal,
- Fig. 2: den Gegenstand nach Fig. 1 nach Aufnahme der Befestigungskrampen im Führungskanal
- Fig. 3: den Gegenstand nach Fig. 1 im Zuge des Eintreibvorgangens,
- Fig. 4: den Gegenstand nach Fig. 1 nach erfolgtem Eintreibvorgang,

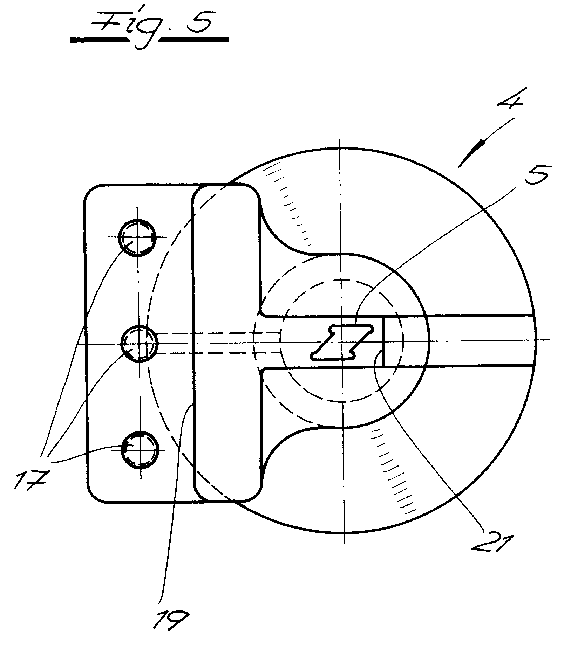

- Fig. 5: eine Ansicht von unten auf den Pressenkopf für den Gegenstand nach Fig. 1,
- Fig. 6: ausschnittsweise das Biegegesenk für den Gegenstand nach Fig. 1 in Aufsicht,

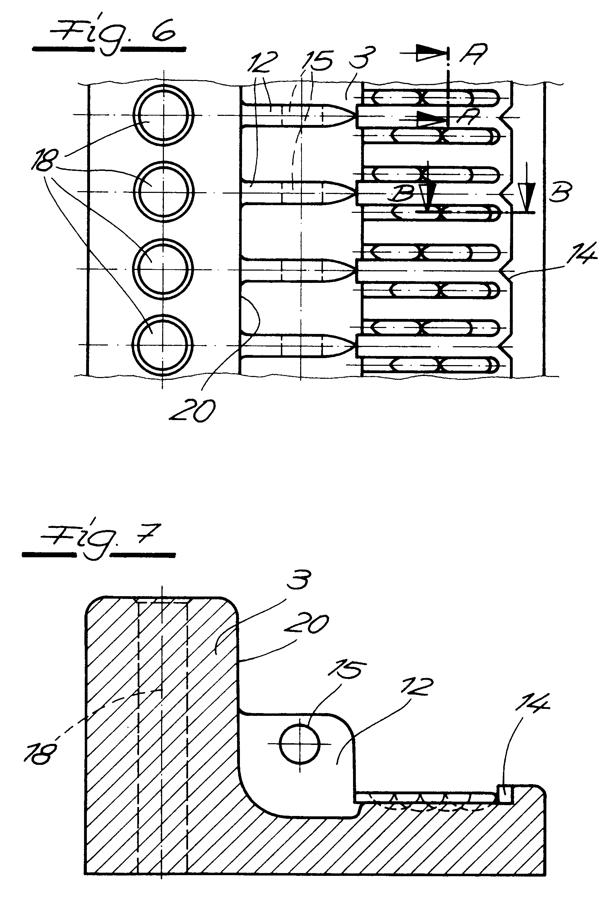

- Fig. 7: eine Seitenansicht auf den Gegenstand nach Fig. 6,
- Fig. 8: einen Querschnitt A-A durch den Gegenstand nach Fig. 6,

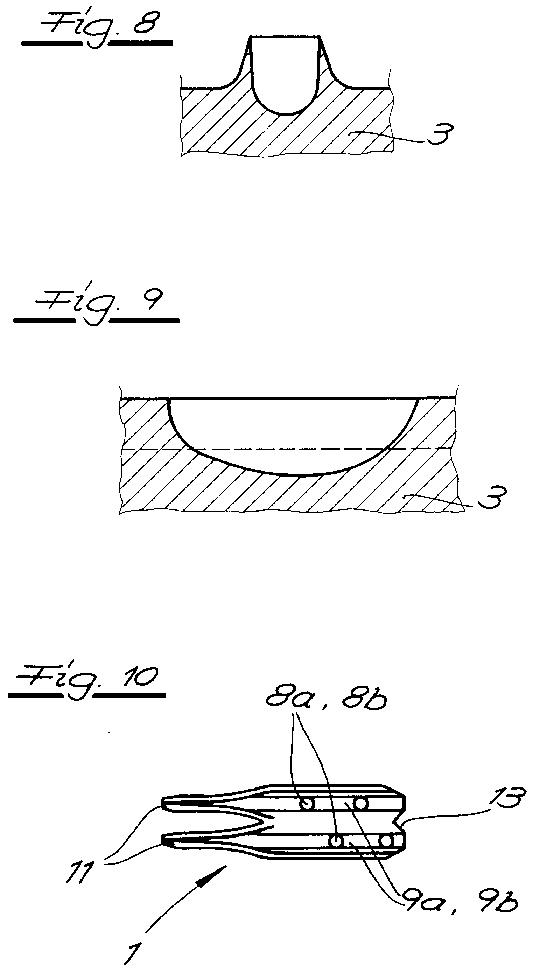

- Fig. 9: einen Längsschnitt B-B durch den Gegenstand nach Fig. 6 und
- Fig. 10: eine Verbinderklammer mit einem zwillingsähnlichen Scharnierbogenpaar in Aufsicht.

In den Figuren ist eine Vorrichtung zum Befestigen von Riemenverbindern aus in Reihe angeordneten U-förmigen Verbinderklammern 1 auf den Gurtbandenden 2 von Transportgurten dargestellt. Diese Vorrichtung weist in ihrem grundsätzlichen Aufbau zumindest ein Biegegesenk 3 zum Positionieren der Verbinderklammern 1 und einen Pressenkopf 4 auf, der entlang des Biegegesenkes 3 versetzbar oder geführt sein kann. Dieser Pressenkopf 4 weist einen Führungskanal 5 für einen gegen das Biegegesenk 3 niederdrückbaren Stempel 6 und für U-förmige Befestigungskrampen 7 auf, die mittels des Stempels 6 durch übereinander angeordnete Führungslöcher 8a, 8b in den Klammerschenkeln 9a, 9b der Verbinderklammern 1 hindurch und unter Durchdringung des zwischen den Klammerschenkeln 9a, 9b eingeschobenen Gurtbandendes 2 eintreibbar sind, so daß deren Spitzen 10 in dem Biegegesenk 3 umgebogen werden. Die Befestigungskrampen 7 sind mit ihren Spitzen 10 bereits in die Führungslöcher 8a des oberen Klammerschenkels 9a der Verbinderklammern 1 eingesetzt bevor die Verbinderklammern 1 in dem Biegegesenk 3 positioniert werden. Das Biegegesenk 3 weist auf seiner einen Seite zwischen die Klammerschenkel 9a, 9b vorderseitig verhindende Scharnierbögen 11 der Verhinderklammern 1 eingreifende Zentrierlamellen 12 und auf der anderen Seite in rückseitige V-förmige Ausnehmungen 13 der unteren Klammerschenkel 9b eingreifende Zentrierkeile 14 auf, die beispielsweise wie die V-förmigen Ausnehmungen 13 der Klammerschenkel einen 90° Winkel definieren. Die Zentrierlamellen 12 besitzen außerdem fluchtende Bohrungen 15 zum Einführen eines von den Scharnierbögen 11 der Verbinderklammern 1 umgriffenen Scharnierstabes 16. Die Zentrierlamellen 12 bilden ferner Anschläge für das zwischen die Klammerschenkel 9a, 9b der Verhinderklammern 1 eingelegte Gurtbandende 2. Nach dem Ausführungsbeispiel weisen die Verbinderklammern 1 jeweils ein zwillingsähnliches Scharnierbogenpaar aus U-förmig gefaltetem Blechmaterial auf. Jeweils eine Zentrierlamelle 12 greift zwischen die beiden Scharnierbögen 11 einer jeden Verbinderklammer 1 ein. Der Pressenkopf 4 besitzt Zentrierzapfen 17, welche in Zentrierbohrungen 18 des Biegegesenkes 3 einsteckbar sind und außer Zentrierfunktion auch Führungsfunktion für den Pressenkopf 4 übernehmen. Außerdem besitzen der Pressenkopf 4 und das Biegegesenk 3 korrespondierende Führungswangen 19, 20. Der Pressenkopf 4 besitzt auf seiner Unterseite einen Zentrieranschlag 21 für das rückseitge Ende der oberen Kammerschenkel 9a der Verbinderklammern 1.

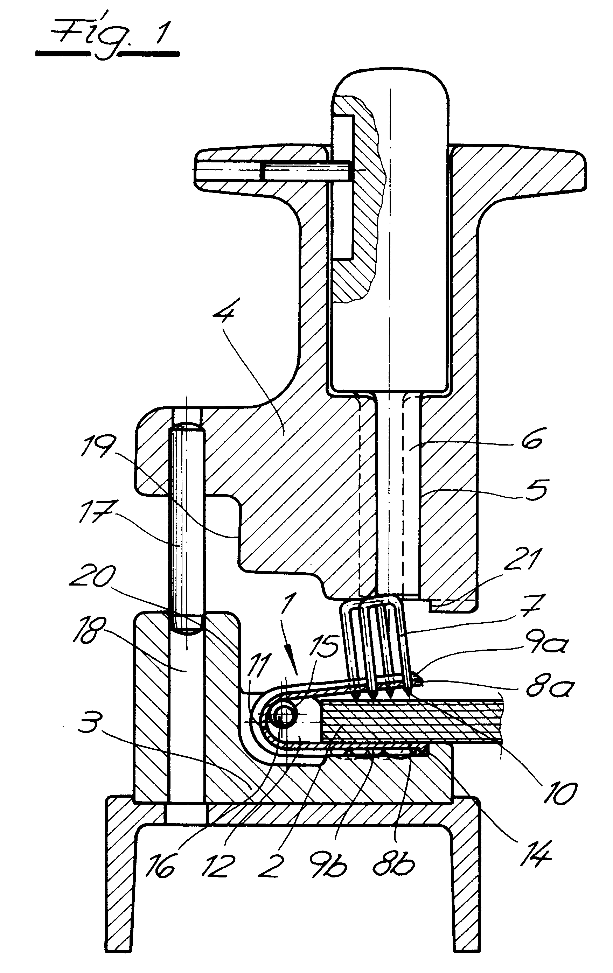

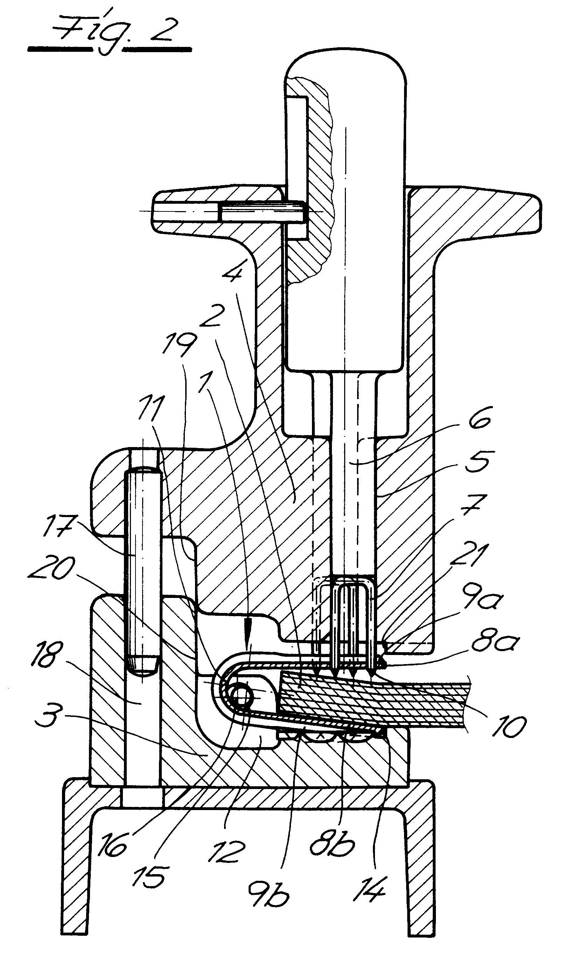

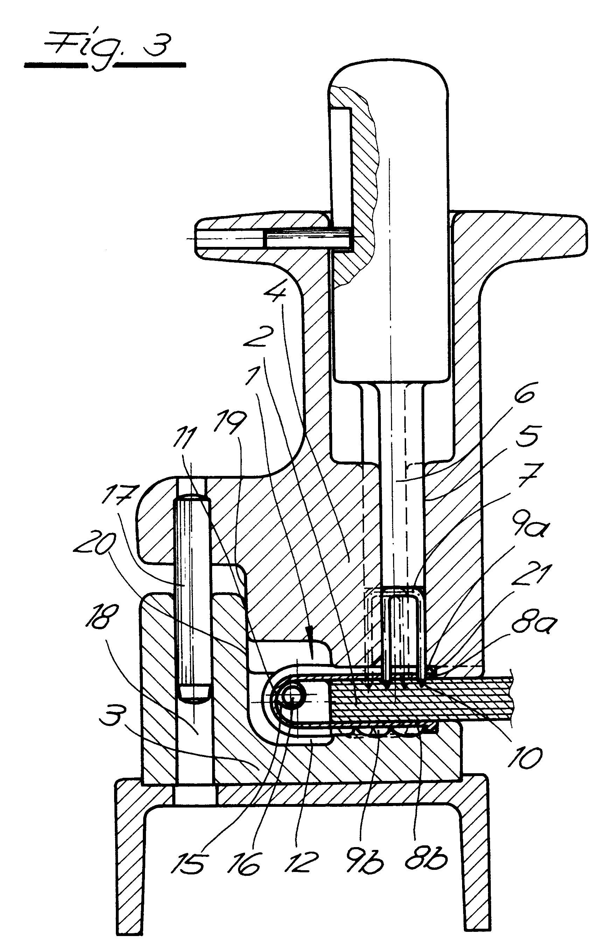

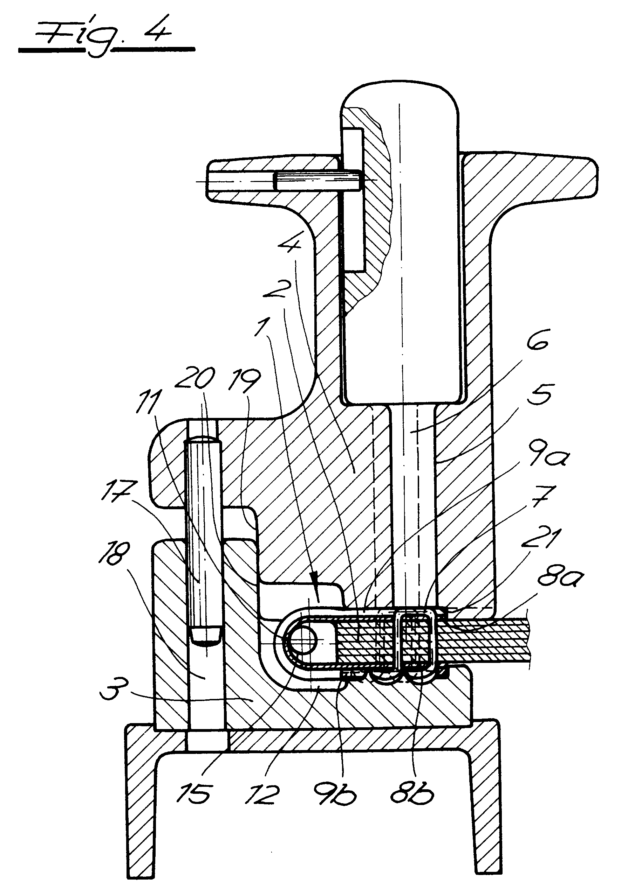

Das Befestigen der Verbinderklammern 1 ist in den Fig. 1 bis 4 dargestellt und unmittelbar verständlich. Die mit ihren Spitzen 10 in den Führungslöchern 8a der oberen Kammerschenkel 9a bereits positionierten Befestigungskrampen 7 werden im Zuge des Aufsetzens des Pressenkopfes 4 auf das Biegegesenk 3 in den Führungskanal 5 eingeführt und nach dem Niederfahren des Pressenkopfes 4 selbst und dem Zusammenpressen der oberen und unteren Klammerschenkel 9a, 9b auf das betreffende Gurtbandende 2 mittels des Stempels 6 durch die oberen Führungslöcher 8a, das Gurtbandende 2 und die unteren Führungslöcher 8b hindurch eingetrieben, so daß sich die auf der Unterseite der unteren Klammerschenkel 9b austretenden Spitzen 10 der Befestigungskrampen 7 in dem Biegegesenk umlegen bzw. umgebogen werden. Daraus resultiert eine sichere Befestigung dieser Befestigungskrampen 7 und folglich der Verbinderklammern 1 bzw. der Riemenverbinder auf solchen Gurtbandenden.

## Patentansprüche

1. Vorrichtung zum Befestigen von Riemenverbindern aus in Reihe angeordneten Verbinderklammern (1) auf den Gurtbandenden (2) von Transportgurten, mit zumindest einem Biegegesenk (3) zum Positionieren der Verbinderklammern (1) und einem auf dem Biegegesenk (3) zentrierbaren Pressenkopf (4) mit einem Führungskanal (5) für einen gegen das Biegegesenk (3) niederdrückbaren Stempel (6) und für Befestigungskrampen (7), die mittels des Stempels (6) durch übereinander angeordnete Führungslöcher (8a, 8b) in den Klammerschenkeln (9a, 9b) der Verbinderklammern (1) hindurch und unter Durchdringung des zwischen den Klammerschenkeln (9a, 9b) eingeschobenen Gurtbandendes (2) eintreibbar sind und deren Spitzen (10) in dem Biegegesenk (3) umgebogen werden, wobei das Biegegesenk (3) auf der einen Seite zwischen die Klammerschenkel (9a, 9b) vorderseitig verbindende Scharnierbögen (11) der Verbinderklammern (1) eingreifende Zentrierlamellen (12) und auf der anderen Seite in rückseitige V-förmige Ausnehmungen (13) der aufliegenden Klammernschenkel (9b) eingreifende Zentrierkeile (14) aufweist und der niederfahrbare Pressenkopf (4) einen Zentrieranschlag (21) für das rückseitige Ende des zugeordneten Klammerschenkels (9a) der Verbinderklammern (1) aufweist.

2. Vorrichtung nach Anspruch 1, dadurch gekennzeichnet, daß die Zentrierlamellen (12) fluchtende Bohrungen (15) zum Einführen eines von den Scharnierbögen (11) der Verbinderklammern (1) umgriffenen Scharnierstabes (16) aufweisen.

3. Vorrichtung nach Anspruch 1 oder 2, dadurch gekennzeichnet, daß die Zentrierlamellen (12) Anschläge für das zwischen die Klammerschenkel (9a, 9b) der Verbinderklammern (1) eingelegte Gurtbandende (2) bilden.

4. Vorrichtung nach einem der Ansprüche 1 bis 3, wobei die Verbinderklammern jeweils ein zwillingähnliches Scharnierbogenpaar aus z. B. gefaltetem Blechmaterial aufweisen, dadurch gekennzeichnet, daß jeweils eine Zentrierlamelle (12) zwischen die beiden Scharnierbögen (11) einer Verbinderklammer (1) eingreifen.

## Claims

1. An apparatus for fastening belt connectors comprising connecting clips (1) disposed in series to the belt band ends (2) of conveyor belts, having at least one bending die (3) for positioning the connecting clips (1) and a pressing bead (4) which can be centred on the bending die (3) and which has a guide channel (5) for a plunger (6) which can be pressed down against the bending die (3) and for fastening staples (7), which can be driven by means of the punch (6) through guide holes (8a, 8b) disposed one above another into the clip limbs (9a, 9b) of the connecting clips (1), with penetration of the belt band end (2) inserted between the clip limbs (9a, 9b), the points (10) of which fastening staples are bent round in the bending die (3), wherein the bending die (3) has centring plates (12) on one side which engage between hinge bows (11) of the connecting clips (1), which hinge bows join the clip limbs (9a, 9b) at the front, and has centring wedges (14) on the other side which engage in V-shaped recesses (13) on the back of the supported clip limbs (9b), and the lowerable pressing head (4) has a centring stop (21) for the back end of the associated clip limb (9a) of the connecting clips (1).

2. An apparatus according to claim 1, characterised in that the centring plates (12) have aligned holes (15) for introducing a hinge pin (16) embraced by the hinge bows (11) of the connecting clips (1).

3. An apparatus according to claim 1 or 2, characterised in that the centring plates (12) form stops for the belt band end (2) inserted between the clip limbs (9a, 9b) of the connecting clips (1).

4. An apparatus according to any one of claims 1 to 3, wherein the connecting clips each have a pair of twin-like hinge bows made of folded sheet metal material for example, characterised in that a centring plate (12) engages between the two hinge bows (11) of each connecting clip (1).

## Revendications

1. Dispositif de fixation d'attaches de courroie constituées d'agrafes (1) disposées en rangée sur les extrémités (2) de courroies de transport, comportant au moins une matrice de pliage (3) pour le positionnement des agrafes (1) et une tête de serrage (4) à centrer sur la matrice de pliage (3) avec un canal de guidage (5) pour un poinçon (6) à abaisser contre la matrice de pliage (3) et pour des crampons de fixation (7), qui peuvent être enfoncés au moyen du poinçon (6) à travers des trous de guidage (8a, 8b) superposés, dans les branches (9a, 9b) des agrafes (1) et par passage de l'extrémité (2) de la courroie introduite entre les branches (9a, 9b) des agrafes et dont les pointes (10) sont repliées dans la matrice de pliage (3), la matrice de pliage (3) comportant d'un côté, des lamelles de centrage (12) s'engageant entre des arcs de charnière (11) des agrafes (1), reliant à l'avant les branches (9a, 9b) des agrafes, et, sur l'autre côté, des coins de centrage (14) s'engageant dans des évidements (13) en V, arrière, des branches (9b) des agrafes reposant dessus, et la tête de serrage (4) à abaisser comportant une butée de centrage (21) pour l'extrémité arrière de la branche (9a) correspondante des agrafes (1).

2. Dispositif selon la revendication 1, caractérisé en ce que les lamelles de centrage (12) présentent des perçages (15) alignés pour l'introduction d'une tige de charnière (16) entourée par les arcs de charnière (11) des agrafes (1).

3. Dispositif selon les revendications 1 ou 2, caractérisé en ce que les lamelles de centrage (12) forment des butées pour l'extrémité (2) de la courroie insérée entre les branches (9a, 9b) des agrafes (1).

4. Dispositif selon l'une des revendications 1 à 3, dans lequel les agrafes comportent chacune une paire d'arcs de charnière jumeaux réalisés dans par exemple un matériau en tôle pliée, caractérisé en ce que chaque lamelle de centrage (12) s'engage entre les deux arcs de charnière (11) d'une agrafe (1).
